Europäisches Patentamt

European Patent Office

Office européen des brevets

(19)

(11) Publication number: **0 405 080**

**A2**

# (12) EUROPEAN PATENT APPLICATION

(21) Application number: **90107325.4**

(22) Date of filing: **18.04.90**

(51) Int. Cl.⁵: **G21C 13/00**

(30) Priority: **19.06.89 US 368738**

(43) Date of publication of application:
**02.01.91 Bulletin 91/01**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Matusz, John Michael**
**644 Blueridge Road**
**Pittsburgh, Pennsylvania 15239(US)**
Inventor: **Keller, Robert L.**
**260 Wills Road**
**Connellsville, Pennsylvania 15425(US)**

(74) Representative: **Patentanwälte Dipl.-Ing. R. Holzer Dipl.-Ing. (FH) W. Gallo**
**Ludwigstrasse 26**
**D-8900 Augsburg(DE)**

(54) **Reactor vessel nozzle thermal barnier.**

(57) A device (2-20) for obturating a conduit (36, 38) to impede transmission of heat through the conduit, composed of: a plurality of parallel, laminar baffle members (10) corresponding in configuration to the conduit (36, 38) and spaced apart from one another; a spring (6) movable between an expanded position for engaging the wall of the conduit (36, 38), when the device (2-20) is located in the conduit (36, 38), to hold the device (2-20) in place in the conduit (36, 38), and a retracted position for permitting the device (2-20) to be displaced relative to the conduit (36, 38); and a connecting structure (8, 18, 20) supporting the baffle members (10) and the spring (6). Apparatus is provided for inserting the device into a conduit and removing the device from the conduit. This apparatus includes a holding tool (52) for holding the blocking device in a defined position, an elongated positioning member (48) carrying the holding tool (52) at its lower end, an operating device (54) carried at the upper end of the positioning member (48), a mechanical motion transmitting component (56) extending through the positioning member (48) and connected between the operating device (54) and the holding tool (52) for operating the tool (52), and a support device (46, 64) coupled to the positioning member (48) for supporting the positioning member (48) while permitting displacement of the positioning member (48) to bring the holding tool (52) in proximity to the conduit (36, 38).

FIG. 4

EP 0 405 080 A2

## REACTOR VESSEL NOZZLE THERMAL BARRIER

The present invention relates to apparatus for use in the performance of annealing treatments, particularly for annealing embrittled reactor vessels. The invention relates more specifically to thermal barriers insertable into conduits extending from such a vessel in order to impede the flow of heat out of the vessel, and installation apparatus there for.

During the normal operation of a nuclear reactor, the reactor vessel, which is normally made of steel and which houses a core containing nuclear fuel, is exposed to intense radiation. Experience has shown that this radiation causes changes in the fine grain structure of the steel walls of the vessel. These structural changes make the walls brittle, a problem commonly referred to as reactor vessel embrittlement. Embrittlement reduces the flexibility of the vessel wall and increases the susceptibility of the vessel wall to fracturing, particularly if subjected to sudden stresses, such as due to operating transient events and pressurized thermal shock events.

Because of this embrittlement phenomenon, the United States Nuclear Regulatory Commission requires that a reactor vessel be removed from service when embrittlement reaches a predetermined stage, thus ending the useful life of this portion of the nuclear power plant. Replacement of such a vessel is extremely expensive because the vessel is built into and is a part of the reactor containment building, thereby making replacement economically impractical.

In order to deal with this problem, it has been proposed to subject such a vessel to thermal annealing in place in order to restore the ductility and toughness of the metal constituting the reactor vessel. Such an annealing treatment requires the creation of relatively high temperatures and accurate control of the temperature at each region of the reactor vessel. In addition, the annealing treatment must be carried out in a manner to avoid thermal damage to components surrounding and connected to the pressure vessel.

Reactor pressure vessels of the type here under consideration are provided with a plurality of nozzles which extend radially outwardly from the vessel wall and are employed for conducting water to and from the vessel during normal operation. During a thermal annealing treatment, a substantial amount of heat would be lost through these nozzles so that components and instruments associated with the nozzles at locations outside of the pressure vessel would be subjected to damage. Moreover, the flow of heat through these nozzles would complicate the task of establishing defined temperature conditions in the reactor vessel metal bordering these nozzles.

It is an object of the present invention to impede the flow of heat through the nozzles of a pressure vessel.

A more specific object of the invention is to provide devices constituting thermal barriers which can be easily inserted in the nozzles prior to an annealing treatment to minimize the flow of heat through the nozzles during the ensuing treatment.

Another object of the invention is to provide apparatus with which such devices can be easily and reliably inserted into the nozzles and subsequently removed therefrom.

With the above objects in view, the invention resides in a thermal barrier device as defined in claim 1 and as defined in more detail in subclaims 2 to 10, and in an apparatus for positioning a blocking device or such a thermal barrier device into a conduit, as defined in claim 11 and as defined in more detail in subclaims 12 to 23.

The thermal barrier devices according to the present invention can be easily constructed to impede the flow of heat through the nozzles to an extent sufficient to enable the desired temperature levels to be maintained at the reactor vessel regions surrounding the nozzles while, at the same time, allowing for an adequate flow of water through the nozzles during emptying of the reactor vessel prior to heat treatment and refilling of the pressure vessel at the end of the heat treatment. This is necessary because the reactor vessel must be filled with water, to provide radiation shielding, while the thermal barriers are being installed and subsequently removed.

The thermal barriers according to the present invention are constructed to be inserted and removed easily while, once installed, being held firmly in place even while water is flowing therepast.

The insertion and removal apparatus according to the present invention allows the barriers to be manipulated in a simple and reliable manner so that installation and removal can be performed in a minimum time with a high assurance that the barriers are properly installed.

Figure 1 is a front end view of a preferred embodiment of a thermal barrier device according to the present invention.

Figure 2 is a cross-sectional plan view taken along the line II-II of Figure 1.

Figure 3 is a simplified side elevation view taken in the direction of the arrow of III of Figure 1.

Figure 4 is a cross-sectional elevational view illustrating a pressure vessel provided with thermal barrier devices and installation and removal apparatus according to a preferred embodiment of the invention.

Figure 5 is a cross-sectional detail view of a nozzle region of the structure shown in Figure 4, with a thermal barrier device installed and engaged by an insertion tool.

Figure 6 is a detail plan view, partly in cross section, of the region shown in Figure 5.

Figure 7 is a detail plan view of a component of the installation apparatus according to the present invention.

Figure 8 is a side elevational view of the component shown in Figure 7.

Figure 9 is a plan view of a component of the apparatus shown in Figure 4.

Figure 10 is an enlarged cross-sectional detail view taken along the line X-X of Figure 9.

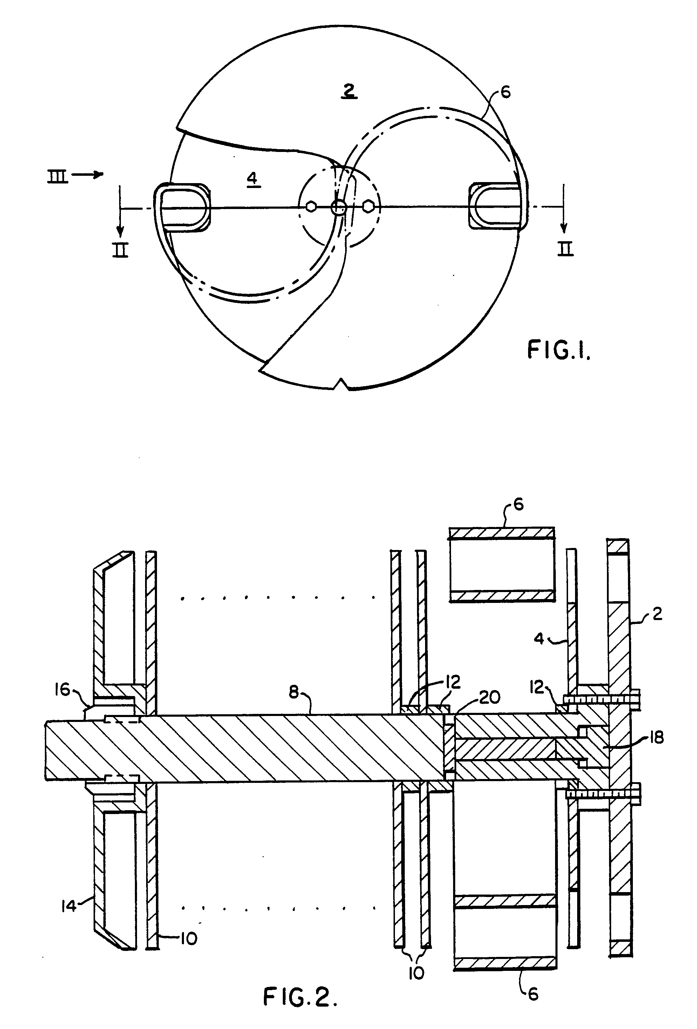

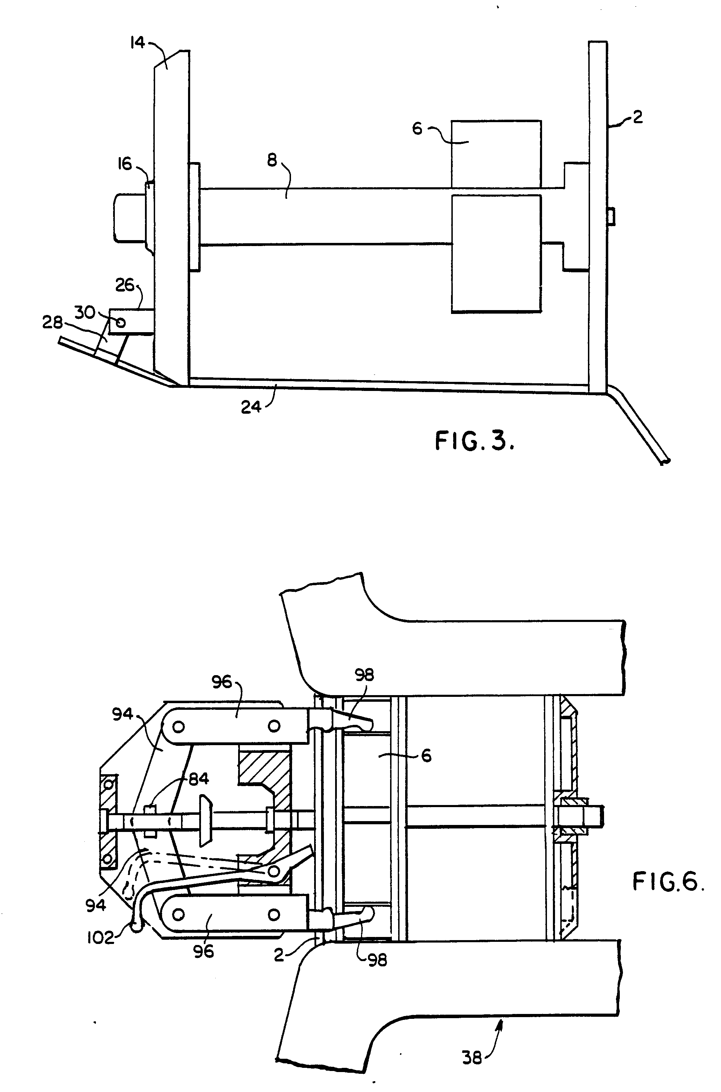

A preferred embodiment of a nozzle barrier according to the present invention is illustrated in Figures 1-3, Figure 1 being a front elevational view, Figure 2 being a cross-sectional plan view taken along the line II-II of Figure 1, and Figure 3 being a simplified side elevational view taken in the direction of arrow III of Figure 1.

As shown in Figure 1, the nozzle barrier includes a circular face plate 2 which, when the barrier is installed in a reactor nozzle, will face the interior of the reactor vessel. Behind face plate 2 there is disposed a first baffle plate 4 and behind baffle plate 4 there is provided an 5-shaped spring 6. Plates 2 and 4 provide a certain degree of thermal isolation between spring 6 and the interior of the reactor vessel sufficient to enable spring 6 to retain its spring properties when the vessel is at annealing temperatures.

Spring 6 is provided at each end with a closed loop for engagement by a tool, to be described below, provided for inserting the barrier into, and extracting the barrier from, a pressure vessel nozzle. In order to permit the tool to grip the loops provided at the ends of spring 6, face plate 2 is provided with a pair of generally square holes and baffle plate 4 is provided with peripheral slots.

Referring to Figure 2, the baffle further includes a mandrel 8 which connects together all of the other baffle components. These components include, in addition to those already identified, a plurality of additional circular baffle plates 10 which alternate, along the length of mandrel 8, with spacers 12, together with an end bell 14 at that end of the baffle which will be remote from the interior of the pressure vessel when the baffle is installed, and a nut 16 which screws onto a threaded portion at the rear end of mandrel 8 in order to secure all of the components together. In order to prevent angular movements of baffle plates 10, mandrel 8 is provided with a longitudinal slot at its periphery (not shown) and plates 10 are provided with matching slots for receiving a key.

Mandrel 8 is provided at its forward end with a central, axially extending slot for receiving the center of spring 6. After insertion of spring 6, a pin 18 is inserted into the central slot in order to hold spring 6 in place. The edge of spring 6 remote from pin 18 is provided with a notch which engages with a further pin 20 inserted through a radial bore in mandrel 8.

The forward end of mandrel 8 is further provided with a flanged portion having two tapped openings receiving bolts which hold face plate 2 in position on mandrel 8. Face plate 2 additionally serves to retain pin 18 in place so that pins 18 and 20 together maintain spring 6 in a fixed position along the axis of mandrel 8.

It will be noted that when spring 6 is in its unstressed state, shown in Figures 1-3, it projects radially beyond all of the other components of the barrier to an extent sufficient to securely retain the baffle in a pressure vessel nozzle. This assures that the baffle will not be displaced during reactor heat treatment, even when subjected to the force of water flowing through the nozzle during water drainage or filling of the pressure vessel.

According to a preferred embodiment of the invention, all of the baffle components except for spring 6 may be made of stainless steel, and spring 6 may be made of a high temperature resistant alloy of the type sold under the U.S. Trademark Inconel 718.

The outer peripheral surface of end bell 14 is given a conical configuration in order to facilitate introduction of the baffle into a pressure vessel nozzle. The outer edge of face plate 2 is preferably contoured to match the contour of the nozzle end to be engaged by face plate 2. The entire surface of face plate 2 may, if desired, be contoured to precisely match the contour of the vessel wall surrounding the associated nozzle.

The barrier illustrated in Figures 1-3, and described above, effectively obstructs the flow of heat from the interior of the pressure vessel to nozzle regions beyond the barrier, where thermally sensitive components and instruments may be installed. Insertion of such barriers into the pressure vessel nozzles additionally improves the temperature distribution at the joint between the pressure vessel wall and each nozzle.

The barrier assembly can be easily disassembled, without requiring cutting welds, in order to permit radioactive decontamination of its component parts.

In the case of nozzles located in the lower region of a pressure vessel, it may be desirable to provide a siphon for draining water which may become trapped in the nozzle. Figure 3 illustrates a siphon tube 24 provided for this purpose and attached to a bracket 26 of end bell 14 via a lug 28 and a screw 30 which permits tube 24 to pivot relative to bracket 26. In Figure 3, siphon tube 24 is shown in the position which it assumes when the barrier is installed in a nozzle. Prior to installation, and while being lowered through the pressure vessel to the location of the nozzle, tube 24 is pivoted to hang downwardly. This reduces the largest horizontal dimension of the barrier assembly and thus facilitates its introduction via passages provided at the top of the reactor vessel. Additionally, this allows the siphon tube to fill with water as the barrier is being lowered through the vessel, thereby assuring performance of the subsequent siphoning action.

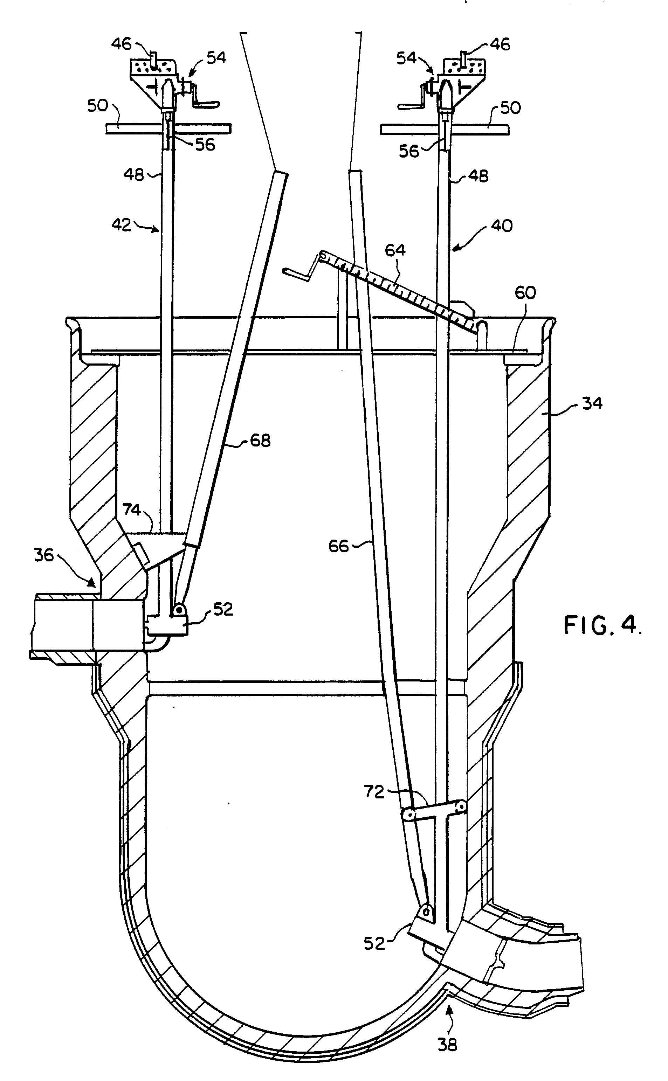

Figure 4 is an elevational view showing a reactor pressure vessel 34 from which all reactor internals have been removed preparatory to heat treatment. One upper nozzle 36 and one lower nozzle 38 of pressure vessel 34 are shown, each nozzle being blocked by a thermal barrier of the type shown in Figures 1 - 3, with the thermal barrier in lower nozzle 38 being provided with a siphon tube.

Insertion of each thermal barrier is achieved by a respective thermal barrier handling tool 40, 42. Each handling tool includes: a lifting shackle 46 via which the weight of the tool is supported by a sling; a tubular stalk 48 of square cross section; a T-handle 50; a tool head 52 carrying a latching mechanism; a crank assembly 54 containing a ratchet mechanism; and a shaft 56 housed within stalk 48 and connected for transmitting rotary movement from its associated crank assembly 54 to its associated tool head 52.

Each tool head 52 includes a mechanism which releasably engages an associated nozzle barrier in order to introduce the barrier into an associated nozzle and subsequently extract the barrier therefrom. A suitable embodiment of this mechanism will be described in greater detail below.

For insertion of the thermal barriers, as well as their subsequent removal, a work platform 60 having access openings is temporarily installed at the top of pressure vessel 34. During the thermal barrier insertion and removal operations, when operating personnel are present on platform 60, vessel 34 will be filled with water to provide radiation shielding.

During insertion and removal movements of a barrier, the weight of the associated handling tool is primarily supported by a sling secured to shackle 46 and the tool is further guided by the operating personnel, with the aid of handle 50. Movement of a barrier into its associated nozzle may be further aided by an insertion fixture 64, which will be described in greater detail below.

Removal of a barrier from its associated nozzle may be aided, if necessary, by an associated extraction tool composed essentially of: a long tubular body 66, 68 essentially constituting a lever; a pin located at the lower end of the tubular body to engage in a recess provided in the associated tool head 52; and a foot 72, 74 supported by the associated tubular body 66, 68 and arranged to rest against the interior wall of vessel 34 to provide a fulcrum about which tubular body 66, 68 can pivot. Each foot 72, 74 can be attached to its associated tubular body 66, 68, to permit a limited degree of pivotal movement to occur therebetween.

To permit the mechanism in each tool head 52 to engage or disengage the associated thermal barrier, the associated crank assembly 54 is operated to transmit rotary movement, via the associated shaft 56, to the mechanism. During insertion of a thermal barrier in lower nozzle 38, whose axis is inclined to the horizontal, handling tool 40 is displaced parallel to that axis with the aid of a component of insertion fixture 64 which supports stalk 48, via a lug 76 fastened to stalk 48, and which is movable along a travel path parallel to the nozzle axis. Insertion fixture 64 can also aid in the extraction of the thermal barrier from nozzle 38.

Since nozzle 36 has a horizontal axis, such an insertion fixture will, in most cases, not be required to guide tool 42 during insertion of a thermal barrier.

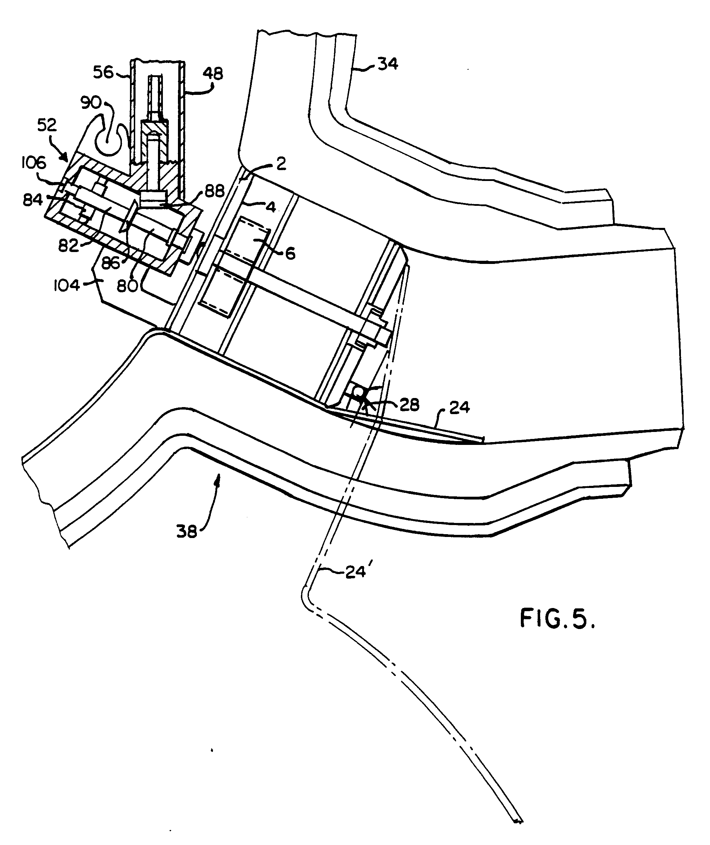

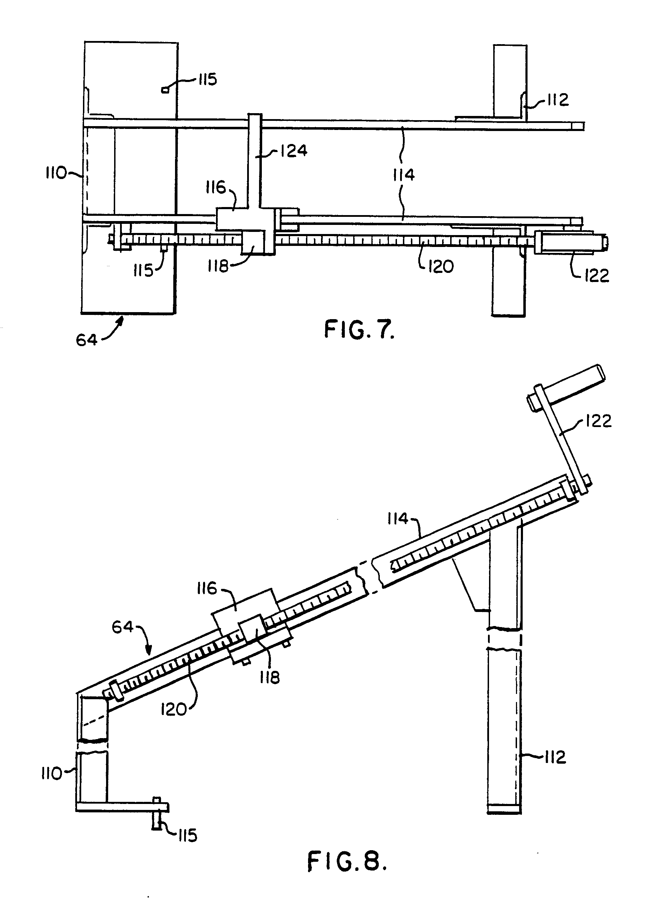

An embodiment of the mechanism disposed in each tool head 52 is shown in Figures 5 and 6, Figure 5 being a side elevational view showing tool head 52 in cross section and Figure 6 being a plan view with portions of the housing of tool head 52 removed.

As shown in Figure 5, the mechanism in tool head 52 includes a shaft 80 supported at its ends by bearings installed in the tool head housing. Shaft 80 has a threaded portion 82 which engages a nut 84 mounted in the tool head housing so as to be fixed against rotation but to be movable parallel to the axis of shaft 80 as that shaft rotates. Fixed to shaft 80 is a bevel gear 86 which engages a bevel gear 88 attached to the lower end of shaft 56 in order to rotate therewith. As is further shown in Figure 5, tool head 52 includes a recess 90 for receiving the pin at the lower end of tubular body 66 (Figure 4).

Turning to Figure 6, nut 84 is pivotally attached to two lever arms 94 each of which is pivotally connected, at its end remote from nut 84 to a further lever arm 96 which is pivoted to the housing of tool head 52 and carries a finger 98 arranged to pass through one of the holes in nozzle barrier face plate 2 and the aligned slot in baffle plate 4 (Figures 1 and 2) in order to engage a loop at one end of spring 6. When nut 84 is displaced toward the thermal barrier, fingers 98 are displaced toward one another in order to radially compress spring 6 and to grasp plate 2 via the square holes therein, and thus permit movement of the thermal barrier in the associated nozzle 38. Movement of nut 84 away from the thermal barrier causes fingers 98 to move away from one another, so that spring 6 is allowed to press radially against the walls of nozzle 38.

Tool head 52 is further provided with a lever 102 which is pivotally mounted and spring biased toward the position shown in broken lines in Figure 6. When tool head 52 is in engagement with the thermal barrier, i.e., fingers 98 are in position to act on spring 6, lever 102 is deflected, by contact with face plate 2, into the position shown in solid lines in Figure 6. In this position, the free end of lever 102 projects out of the tool head housing to provide a visual indication that the engagement position has been attained. Establishment of the engagement position is further aided by a positioning foot 104 which supports face plate 2 and maintains the correct barrier orientation when the tool head is in the engagement position.

The end of shaft 80 which is directed away from the thermal barrier is provided with a drive part 106, such as a square stud, that may be directly engaged by a tool to rotate shaft 80 when the tool head is at a location above platform 60. This will permit the tool head to be engaged with or disengaged from a thermal barrier while tool head 52 is at an elevated position. If necessary, crank 54 can be disengaged from bevel gear 86 during such operation. For effecting engagement and disengagement between tool head 52 and a thermal barrier when the thermal barrier is inserted in a nozzle 36, 38, the mechanism within tool head 52 is operated by the associated crank assembly 54. The ratchet mechanism in assembly 54 serves to maintain the assembly in the engaged position.

Figure 5 additionally shows, in solid lines, the orientation of siphon tube 24 when the associated thermal barrier is inserted in nozzle 38. The broken line position 24′ represents that assumed by siphon tube 24 relative to the thermal barrier as the thermal barrier is being lowered through the pressure vessel to the position of the associated nozzle. If necessary, siphon tube 24 can be pivoted into the orientation which it must assume when the thermal barrier is inserted into nozzle 38 by means of a lanyard secured to the outlet end of siphon tube 24, which is the lower end of the tube when in position 24′, which lanyard extends upwardly through pressure vessel 34 to the level of platform 60.

One preferred embodiment of insertion fixture 64 is shown in plan view in Figure 7 and in side elevation in Figure 8. Insertion fixture 64 is composed of two vertical posts 110 and 112 mounted on feet which rest on platform 60 and supporting two rails 114, each having a rectangular cross section. At least one foot is provided with positioning pins 115. A block 116 is provided with a rectangular passage through which one of the rails 114 extends, so that block 116 is supported by that rail 114. Block 116 carries a projecting part 118 provided with a threaded passage through which extends a threaded rod 120 supported at its ends by bearings secured to the one rail 114 and provided at one end with a crank 122 via which rod 120 can be manually rotated in order to advance projecting part 118, and thus block 116, along the one rail 114.

Block 116 additionally carries a pin or rod 124 which rests upon the other rail 114 and constitutes the support for lug 76 (Figure 4). During insertion of a thermal barrier, crank 122 is rotated to move block 116, and thus pin 124, along the path defined by rails 114 in order to cause the barrier to move along the nozzle axis.

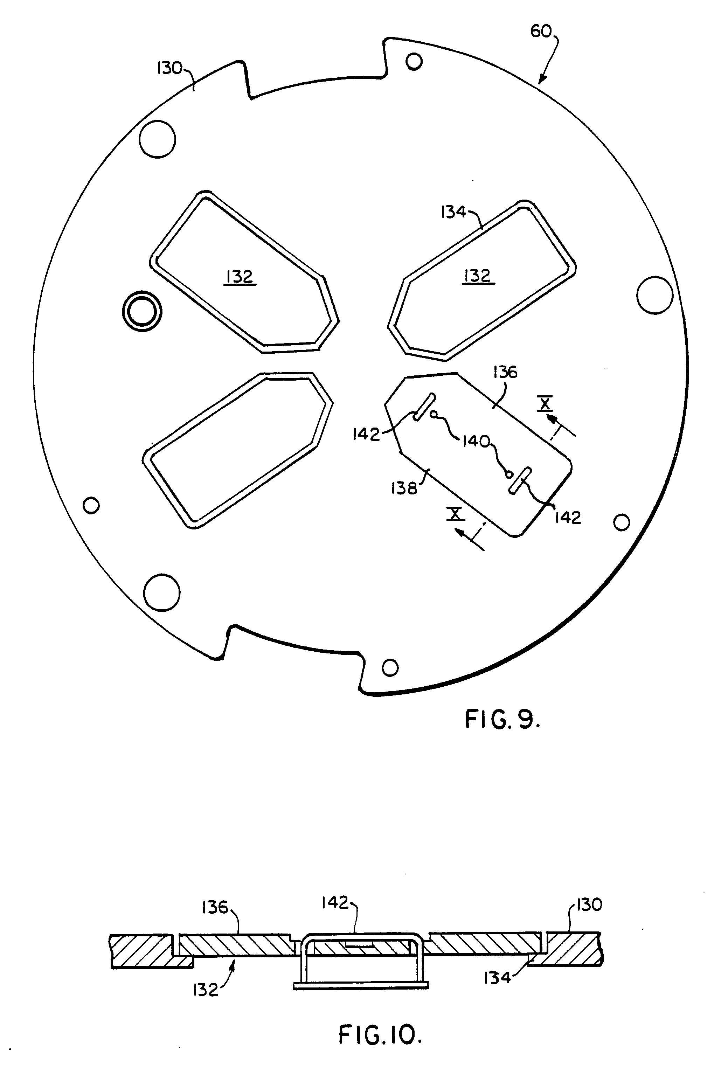

One embodiment of platform 60 is shown plan view in Figure 9. Platform 60 is constituted by a generally circular steel plate 130 provided with an array of access openings 132 for the introduction of barriers, handling tools and extraction tools. Each opening 132 is provided with a recessed ledge 134 for supporting a removable cover 136. Other openings shown in Figure 9 are provided for receiving alignment devices which are not of significance to the present invention. Plate 130 is additionally provided, at spaced locations about its periphery, with screws (not shown) for securing platform 60 in a desired position at the top of vessel 34. Openings 132 are arranged such that each opening is in line with one of the vessel nozzles into which a barrier is to be placed. When fixture 64 is placed on platform 60, pins 115 rest against the edge of an associated access opening 132 in plate 130 to accurately locate fixture 64.

Each ledge 134 is recessed downwardly by a distance selected to conform to the thickness of the associated cover 136 so that when a cover 136 is in place, it defines, together with the upper surface of plate 130, a flat work surface.

Each cover 136 is provided with a group of screws 138 for fastening the cover to plate 130. In addition, each cover includes two tapped blind bores 140 for the attachment of mechanical handling devices to lift cover 136, and with two handles 142 for permitting manual lifting of the cover. Referring to Figure 10, it will be seen that each handle 142 is composed of a U-shaped part whose ends are welded to a horizontal bar located adjacent the bottom surface of cover 136. The legs of the U-shaped part extend through passages formed in cover 136, while the base of that part lies in a recessed region formed in the upper surface of cover 136. The center of this recessed region is provided with a groove which permits initial gripping of handle 142. Handle 142 is loosely mounted on cover 136 so that when handle 142 is lifted, the bar at the underside of cover 136 comes to bear against the lower surface of cover 136, whereupon the cover can be lifted. When not in use, handle 142 does not extend above the upper surface of cover 136, and thus does not present a hazard to workers standing on platform 60.

All parts of platform 60 are preferably made of stainless steel.

After thermal barriers according to the present invention have been installed, the reactor vessel can be annealed with the system disclosed in the above-cited copending U.S. application bearing U.S. Serial No. 368,456, using the heater unit assembly disclosed in the above-cited copending U.S. application bearing Serial No. 368,432.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

**Claims**

1. A device (2-20) for obturating a conduit to impede transmission of heat through the conduit, characterized by:
a plurality of parallel, laminar baffle members (10) corresponding in configuration to the conduit (36, 38) and spaced apart from one another; spring means (6) movable between an expanded position for engaging the wall of the conduit (36, 38), when said device (2-20) is located in the conduit (36, 38), to hold said device (2-20) in place in the conduit (36, 38), and a retracted position for permitting said device (2-20) to be displaced relative to the conduit (36, 38); and connecting means (8, 18, 20) supporting said baffle members (10) and said spring means (6).

2. The device (2-20) as defined in claim 1, characterized in that said spring means (6) comprise an S-shaped spring having opposed ends which are configured to engage the wall of the conduit (36, 38) in the expanded position of said spring means (6) and which are movable toward one another to reach the retracted position of said spring means (6).

3. The device (2-20) as defined in claim 2, characterized in that each end of said spring (6) is formed into a loop for receiving a tool serving (52) to move said spring ends to the retracted position of said spring means (6).

4. The device (2-20) as defined in claim 2 or 3, characterized in that said connecting means (8, 18, 20) comprise a mandrel (8) with one end of said mandrel (8) being provided with an axially extending slot receiving a portion of said spring (6) which is located midway between said spring ends.

5. The device (2-20) as defined in claim 4, characterized in that said connecting means (8, 18, 20) further comprise at least one pin (18, 20) inserted into said mandrel (8) for preventing movement of said spring (6) relative to said mandrel (8) in the axial direction thereof.

6. The device (2-20) as defined in claim 4 or 5, characterized in that an end piece (14) is fixed to the other end of said mandrel (8) and has a tapered peripheral edge for guiding the device (2-20) into the conduit (36, 38).

7. The device (2-20) as defined in claim 6, characterized in that said baffle members (10) and said end piece (14) are dimensioned to form a gap with the conduit (36, 38) for flow of liquid through the conduit (36, 38) when the device (2-20) is installed therein.

8. The device (2-20) as defined in claim 6 or 7, characterized in that a siphon tube (24) is carried by the device (2-20) at an appropriate location for siphoning liquid out of the conduit (38, 38) when said device (2-20) is installed in the conduit (36, 38).

9. The device (2-20) as defined in claim 8, characterized in that said siphon tube (24) is pivotally mounted to said end piece (14) in a manner to automatically assume a generally vertical orientation when said device (2-20) is separated from the conduit (36, 38).

10. The device (2-20) as defined in any of claims 4 to 9, characterized in that a face plate (2) is secured to said one end of said mandrel and configured to mate with a defined region of the conduit (36, 38).

11. An apparatus for positioning a blocking device (2-20), in particular a device as defined in any of claims 1 to 10, relative to a conduit (36, 38) extending from the wall of a vessel (34) which is open at the top, said apparatus characterized by:
holding tool means (52) having a mechanism (82, 84, 94, 96, 98) for releasably holding the blocking device (2-20) in a defined position relatve to said holding tool means (52, 54, 56);
an elongated positioning member (48) having an upper end and a lower end, said holding tool means (52) being carried at said lower end of said positioning member (48);

mechanism operating means (54) carried at said upper end of said positioning member (48);

mechanical motion transmitting means (56) extending through said positioning member (48) and connected between said opening means (54) and said mechanism for operating said mechanism under control of said operating means; and

support means (46, 64) coupled to said positioning member (48) for supporting said positioning member (48) while permitting displacement of said positioning member (48) to bring said holding tool means (52) in proximity to the conduit (36, 38).

12. The apparatus as defined in claim 11 further characterized by means mountable at the top of the vessel (34) and defining a platform (60) for supporting a worker at a level which permits the worker to control said mechanism operating means (54) while said holding tool means (52) are in proximity to the conduit (36, 38).

13. The apparatus as defined in claim 12, characterized in that said means defining a platform (60) comprise:

a plate (130) securable to the top of the vessel (34) and provided with a plurality of openings (132) permitting access to the interior of the vessel (34); and

a cover (136) for closing each said opening (132).

14. The apparatus as defined in claim 13, characterized in that each said opening (132) is formed to receive said cover (136) in a manner such that the top surface of said cover (136) is substantially flush with the top surface of said plate (130).

15. The apparatus as defined in claim 13 or 14, characterized in that said means defining a platform (60) include a lifting handle (142) coupled to said cover (136) and movable between a lowered position in which said lifting handle (142) is located below the top surface of said cover (136) and a raised position in which said lifting handle (142) projects above said top surface of said cover (136) in a position to be grasped.

16. The apparatus as defined in any of claims 11 to 15, characterized in that said holding tool means (52) include

two fingers (98) insertable into openings provided in a front wall of said blocking device, and

means (92, 84, 94, 96) for moving said fingers (98) relative to one another in order to grasp the blocking device (2-20).

17. The apparatus as defined in claim 16, characterized in that:

said means (82, 84, 94, 96) for moving said fingers (98) comprise a rotatable first shaft (82) and a linkage (84, 94, 96) connected between said first shaft (82) and said fingers (98) for moving said fingers (98) relative to one another in response to rotation of said first shaft (82);

said mechanism operating means (54) comprise a member for producing rotary motion; and

said motion transmitting means (56) comprise a rotatable second shaft coupled between said member for producing rotary motion and said first shaft (82) for rotating said first shaft (82) in response to rotary motion of said member.

18. The apparatus as defined in claim 17, characterized in that said first shaft (28) has one end (106) shaped so as to permit said first shaft (82) to be directly rotated.

19. The apparatus as defined in any of claims 16 to 18, characterized in that said holding tool means (52) comprise a visual signalling device (102) disposed to be displaced into a signalling position by the front wall (2) of the blocking device (2-20) when the blocking device (2-20) is in the defined position relative to said holding tool means (52), said signalling device (102) having a part which is visible only when said signalling device (102) is in said signalling position.

20. The apparatus as defined in any of claims 11 to 19, characterized in that said holding tool means (52) are provided with a receptacle (90), and that an extraction tool (66, 68) is engageable in said receptacle (90) and operable from a location at the top of the vessel (34) for producing a force in a direction to force the blocking device (2-20) out of the conduit (36, 38).

21. The apparatus as defined in claim 20, characterized in that said extraction tool (66, 68) comprises an elongated bar member provided at one end with a connecting element releasably engageable in said receptacle (90); and a support element (72, 74) secured to said bar member and located to bear against the wall of the vessel (34) to provide a fulcrum for pivotal movement of said bar member.

22. The apparatus as defined in any of claims 11 to 21, for inserting the blocking device into a conduit (38) having a central axis which is inclined to the horizontal, characterized in that said support means (64) are arranged to be disposed above the vessel (34) and comprise:

a guide device (124) for engaging said elongated positioning member (48); and

displacement means (114, 116, 118, 120) for displacing said guide device (124) along a path parallel to the central axis of the conduit (38) for guiding the blocking device (2-20) into the conduit (38) while the blocking device (2-20) is being held by said holding tool means (52).

23. The apparatus as defined in claim 22, characterized in that said mechanism operating means (54) and said displacement means (114, 116, 118, 120) are manually operable.

III →

III ↓

II ↓        II ↓

2

6

4

FIG.1.

6

8        12    20    12    2

16                    4

18

14        10        10        6

FIG.2.

FIG.3.

FIG.6.

FIG. 4.

FIG.5.

FIG. 7.

FIG. 8.

EP 0 405 080 A2

FIG. 9.

FIG. 10.